# EUROPEAN PATENT APPLICATION

(11) **EP 4 459 647 A1**
(43) Date of publication of application: **06.11.2024**
(21) Application number: 24169845.5
(22) Date of filing: 12.04.2024
(51) Int. Cl.: H01G 11/10, H01G 11/18, H01G 11/82, H01G 11/78, H01M 10/65, H01M 10/6557, H01M 50/204

(54) **SUPPORT STRUCTURE AND ENERGY STORAGE UNIT FOR AN ENERGY STORAGE MODULE ALLOWING FOR MORE UNIFORM TEMPERATURE DISTRIBUTION**

(30) Priority: 05.05.2023 DE 102023111690
(71) Applicant: Skeleton Technologies GmbH, 01900 Grossröhrsdorf (DE)
(72) Inventor: Püü, Markko, 01900 Großröhrsdorf (DE)
(74) Representative: KASTEL Patentanwälte PartG mbB

(57) **Abstract**

A support structure for an energy storage module the support structure being configured for supporting a plurality of energy storage cells comprises:
- a bottom plate member that is arranged and configured to the plurality of energy storage cells; and
- a top plate member arranged and configured to cover the one or more stacks of energy storage cells,

wherein the bottom plate and the top plate are spaced apart along a vertical direction that is orthogonal to both the bottom plate and the top plate,
wherein the bottom plate member includes a plurality of bottom ventilation holes and/or the top plate member includes a plurality of top ventilation holes,
wherein the respective ventilation holes are arranged such that, when viewed along the vertical direction through an arbitrarily chosen ventilation hole, only a holefree portion of the respective plate member is visible through that chosen ventilation hole.

## Description

The invention relates to ventilation concepts for energy storage modules. More specifically the invention relates to measures that allow a more uniform thermal load within energy storage modules.

Electrical energy storage modules are well known and typically combined into larger units of energy storage systems, e.g., for independent power supplies, energy storage for renewable energies or energy buffers for providing enough power for peak loads.

Suitable energy storage modules include battery based modules and - especially useful for fast charging and discharging - ultracapacitor based modules.

CN 210 925 775 U discloses a super capacitor energy storage module where plurality of capacitors are arranged in parallel, and the upper and lower ends of the capacitors are fixedly connected with interfaces of laminated busbars. There are no venting holes in the laminated busbars.

CN 206 711 772 U discloses a super capacitor module that has a plurality of parallel supercapacitor units. The supercapacitor units are connected via busbars. Cooling is effected by a radiator that is attached to the top laminated busbar.

CN 112 310 522 A discloses a supercapacitor energy storage module that comprises a frame, batteries or capacitors, an upper laminated busbar, a lower laminated busbar and a front cover plate. The plurality of batteries or capacitors are arranged in the frame in an array manner. No venting holes are present in the laminated busbars.

CN 218 215 014 U discloses a supercapacitor energy storage module. The supercapacitor energy storage module comprises heat dissipation plates that are located on the two end faces of the supercapacitor cells. Heat is conducted between the pole columns of the supercapacitor single bodies and the heat dissipation plates and heat dissipation holes are formed in the heat dissipation plates so that air circulation can be facilitated to take away heat. The heat dissipation holes are arranged relative to each other such that a laminar fluid flow may flow between the heat dissipation plates directly along the shortest path between the heat dissipation plates.

It is the object of the invention to provide measures that allow a more uniform distribution of thermal load within energy storage modules.

The object is achived by the subject-matter of the independent claims. Preferred embodiments are subject-matter of the dependent claims.

The invention provides a support structure for an energy storage module the support structure being configured for supporting a plurality of energy storage cells, the support structure comprising:
- a bottom plate member that is arranged and configured to the plurality of energy storage cells; and
- a top plate member arranged and configured to cover the one or more stacks of energy storage cells,

wherein the bottom plate and the top plate are spaced apart along a vertical direction that is orthogonal to both the bottom plate and the top plate,
wherein the bottom plate member includes a plurality of bottom ventilation holes and/or the top plate member includes a plurality of top ventilation holes,
wherein the respective ventilation holes are arranged such that, when viewed along the vertical direction through an arbitrarily chosen ventilation hole, only a holefree portion of the respective plate member is visible through that chosen ventilation hole.

Preferably, at least one bottom ventilation hole and at least one top ventilation hole are arranged relative to each other such that, when viewed along the vertical direction through an arbitrarily chosen ventilation hole of one of the bottom plate and the top plate, no ventilation hole of the other of the bottom plate and the top plate is in alignment with the arbitrarily chosen ventilation hole along the vertical direction.

Preferably, the bottom plate member and/or the top plate member include a plurality of cell mounting portions that are configured for mounting a plurality of energy storage cells, and, when viewed along the vertical direction, each ventilation hole is arranged in a horizontal plane defined by the bottom plate member and/or the top plate member and in a gap portion that is defined between neighboring mounting portions.

Preferably, a fluid path length of a laminar fluid flow entering through an arbitrary chosen bottom ventilation hole and exiting through an arbitrarily chosen top ventilation hole is greater than a plate distance between the bottom plate and the top plate that is measured parallel to the vertical direction, or such that such that a fluid path length of a laminar fluid flow entering through an arbitrary chosen top ventilation hole and exiting through an arbitrarily chosen bottom ventilation hole is greater than a plate distance between the bottom plate and the top plate that is measured parallel to the vertical direction.

The invention provides an energy storage unit for an energy storage module, the energy storage unit comprising a support structure and plurality of energy storage cells each energy storage cell being fixed to one of the mounting portions.

Preferably, a group of three or four neighboring energy storage cells define therebetween at least one vertical flow path that extends between the bottom plate member and the top plate member.

Preferably, the vertical flow path has provided on one of its end portions one ventilation hole and on its opposite end portion a holefree portion of the respective plate member.

Preferably, a group of three neighboring energy storage cells is arranged such that, when viewed along the vertical direction, the energy storage cells are located so as to form vertices of an equilateral triangle, and center axes of the vertical flow path and one ventilation hole are located at the center of the equilateral triangle.

Preferably, a group of four energy storage cells is arranged such that, when viewed along the vertical direction, the energy storage cells are located so as to form vertices of a rhombus, and center axes of the vertical flow path and one ventilation hole are located at the center of a triangle formed by a group of three neighboring energy storage cells of the four neighboring energy storage cells.

Preferably, a group of at least four energy storage cells define therebetween a horizontal flow path that extends parallel to and between the bottom plate member and the top plate member.

Preferably, the horizontal flow path includes the ventilation holes on either a top portion or a bottom portion.

Preferably, a second group of at least four energy storage cells define therebetween a second horizontal flow path that extends parallel to and between the bottom plate member and the top plate member as well as parallel to the horizontal flow path.

Preferably, the second horizontal flow path includes the ventilation holes on the opposite side of the top portion or bottom portion compared to the horizontal flow path.

The invention provides an energy storage module comprising an energy storage unit and a housing structure in which the energy storage unit is accommodated, wherein the housing structure comprises at least one intake plenum for cooling fluid and an exhaust plenum for the cooling fluid, and the intake plenum and the exhaust plenum are arranged to direct the flow of cooling fluid between the bottom plate member and the top plate member.

Preferably, at least one of the intake plenum and/or the exhaust plenum includes a fan.

Laminated busbars are thought to be the future in manufacturing of energy storage modules. While not necessarily in broad application just yet, the prospect of successfully implementing this concept can be significant game changer in mass producing energy storage modules. While certainly viable from an electrical stand point, laminated busbars pose a challenge regarding thermal management within the energy storage module.

Conventionally, busbars are comparatively large slabs of a highly conductive metal (typically aluminium) that are welded to the individual storage cells. This approach is easy and in terms of thermal management allows for enough space of airflow that can cool not only the cells but also the busbars themselves.

In the laminated busbar concept, the individual slabs are incorporated in a laminate structure formed from less heat conductive material such as epoxy. In one approach the laminate structure includes special heat conductive layers that allow a better distribution of heat.

In addition, in some approaches heat dissipation holes are formed in the laminate to sort of emulate the more open structure formed by plain busbars. The known approach basically follows the rule that the more heat dissipation holes are present, the better for cooling the storage cells.

However, this approach neglects some important properties of energy storage cells, when they are brought togehter in this fashion. While energy storage cells are mass manufactured to a certain specification, different energy storage cells - even from the same fabrication line - differ slightly in their properties.

There is considerable effort using management systems to "equalize" the storage cells and avoid too much imbalance in their properties, as this may cause severe or even catastrophic malfunctions of the energystorage module.

It is known that thermal load causes aging of the storage cells which may cause deterioration of the overall performance of the respective cell, e.g., due to a loss in useable capacity.

The ideas presented herein aim at a more uniform aging of the storage cells by reducing the temperature difference between individual cells in the storage module.

In contrast to the known measures, the ventilation holes are arranged in a pattern that does provide enough cooling, but also reduces the temperature difference between individual cells.

The applicant has performed computer simulations of the temperature difference between individual cells. Reference is made to the enclosed simulation results which are incorporated in this disclosure by reference. Key indicators are the maximum cell temperature increase in K, the difference between the maximum and minimum cell temperature in K and the thermal resistance in K/W.

The maximum cell temperatue increase is up to 6 K for no ventilation holes or too much ventilation holes. The optimal ventilation hole pattern reduces the temperature increase by nearly 1 K or 17 %. Also the spread between the maximum and minimum cell temperature can be reduced by almost 1 K or nearly 20 %. Most strikingly, the thermal resistance is more or less independent of the current and - for the optimal ventilation hole pattern - is consistently 10 % less than the comparative examples.

Embodiments of the invention are described in more detail with reference to the accompanying schematic drawings that are listed below.
Fig. 1 depicts a top view of an embodiment of an energy storage module;
Fig. 2 depicts a top view of a temperature distribution of the energy storage module of Fig. 1;
Fig. 3 depicts a top view of an embodiment of an energy storage module as a comparative example;
Fig. 4 depicts a top view of a temperature distribution of the energy storage module of Fig. 3;
Fig. 5 depicts a top view of an embodiment of an energy storage module as a comparative example; and
Fig. 6 depicts a top view of a temperature distribution of the energy storage module of Fig. 5.

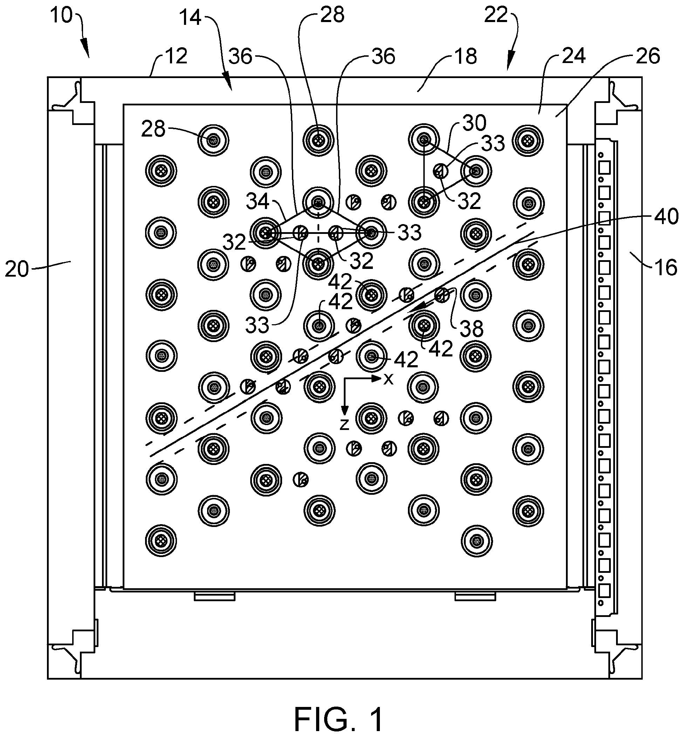

Referring to Fig. 1, an energy storage module 10 is depicted. The energy storage module 10 comprises a housing structure 12. The housing structure 12 accomodates an energy storage unit 14 to be described later.

The housing structure 12 is generally known and preferably configured as a 19" housing structure so it can be mounted in a typical 19" rack. The housing structure 12 is configured such that there is some air space around the energy storage unit 14 so as to allow airflow for cooling.

The housing structure 12 may comprise a first intake plenum 16. The first intake plenum 16 may be arranged on the right side of the housing structure 12. The first intake plenum 16 may include a fan for generating airflow towards the energy storage unit 14 or may redirect airflow from the 19" rack towards the energy storage unit 14.

The housing structure 12 may comprise a second intake plenum 18. The second intake plenum 18 may be arranged on the back side of the housing structure 12. The second intake plenum 18 may include a fan for generating airflow towards the energy storage unit 14 or may redirect airflow from the 19" rack towards the energy storage unit 14.

The housing structure 12 may comprise an exhaust plenum 20. The exhaust plenum 20 may be arranged on the left side of the housing structure 12 or in general opposite the first intake plenum 16. The exhaust plenum 20 may include a fan for generating airflow away from the energy storage unit 14 or may redirect the airflow.

The airflow is in general from the first intake plenum 16 towards the exhaust plenum 20, e.g., from right to left in this example. In case of both intake plena 16, 18 being present, the airflow is in general diagonal from the right-back towards the left-front (where back and front are up and down in the drawing plane as the drawing is in top view).

The energy storage unit 14 comprises a bottom plate member 22 and a top plate member 24. Since the bottom plate member 22 and the top plate member 24 are similar in structure, only the top plate member 24 is described in more detail for the sake of brevity.

The top plate member 24 is preferably electrically isolating. The top plate member 24 is configured as a laminated structure 26. The laminated structure 26 may include a plurality of layers. A bottom layer may be insulating and is preferably made of e.g. fiber composite or circuit board material, or foil. Another layer may include a plurality of busbar members that electrically connect pairs of energy storage cells 28 in the desired configuration but are electrically isolated from each other. This layer may be an epoxy layer, for example. Preferably, the energy storage cells 28 are ultracapacitors.

For example all energy storage cells 28 may be coupled in series. It is also possible to have multiple stacks of energy storage cells 28 that are coupled in series, where the stacks are coupled in parallel or vice versa.

A top layer may cover the busbar layer and again be made of insulating material, e.g. the same material as the bottom layer.

The energy storage unit 14 may include a plurality of energy storage cells 28 that are electrically coupled by the bottom and top plate members 22, 24.

A first group of neighboring energy storage cells 28 can be arranged so as to form vertices of an equilateral triangle 30. In the center of the triangle 30 a ventilation hole 33 is formed in the top plate member 24, for example. Furthermore, the three neighboring energy storage cells 28 define a vertical flow path 32 for cooling air. The vertical flow path 32 has on its one end portion the ventilation hole 33 and on its other end portion a holefree or solid portion of the bottom plate member 22. The ventilation hole 33 - as well as the vertical flow path 32 - is preferably arranged in the center of the equilateral triangle 30.

Furthermore, it is possible for a group of four energy storage cells 28 to form vertices of a rhombus 34. Specifically, the rhombus 34 can be seen as two triangles 36 joined together at their respective base. The triangles 36 need not be equilateral but are preferably equilateral triangles 30.

In other words, the group can be seen as a composition of two of the first groups where two energy storage cells 28 are shared with each of the triangles 36.

It is also possible for the energy storage cells 28 to define a horizontal flow path 38. The horizonal flow path 38 may extend along a line 40, where to the right and left of the line 40 energy storage cells 28 are arranged such that a connecting line between their terminals 42 is parallel to the line 40.

The horizontal flow path 38 includes at least one ventilation hole 33, where a preferred number is from 4 to 7 along a specific horizontal flow path 38.

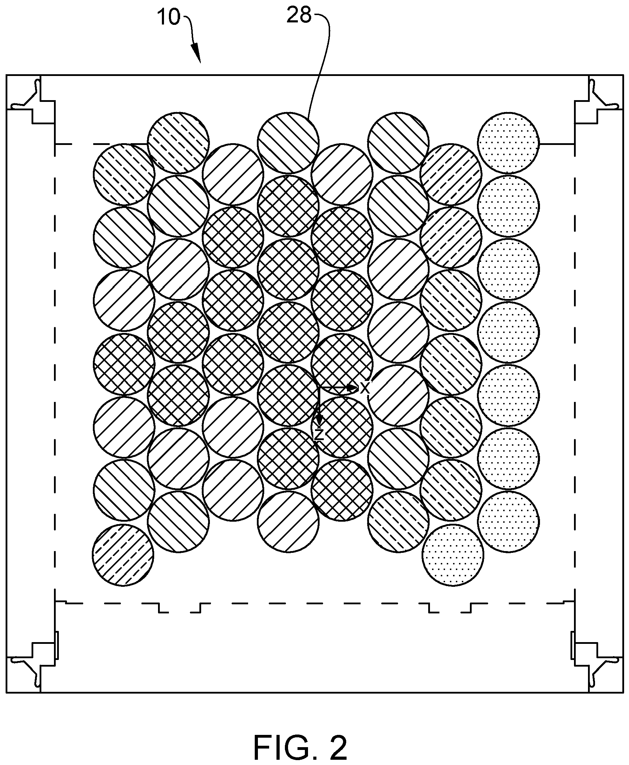

Referring to Fig. 2, the function is described in more detail without prejudice. The cool air flow is taken in by the intake plena 16, 18 and flows along the horizontal flow paths 38. The air flow passes the energy storage cells 28 and aggregates heat along the way. When reaching a ventilation hole 33 the airflow partially bleeds off thereby removing heat from the energy storage unit 14 but still leaving enough cooling capability for the remaining energy storage cells 28 along the horizontal flow path 38.

This results in a more uniform temperature distribution between the energy storage cells 28 as illustrated in Fig. 2.

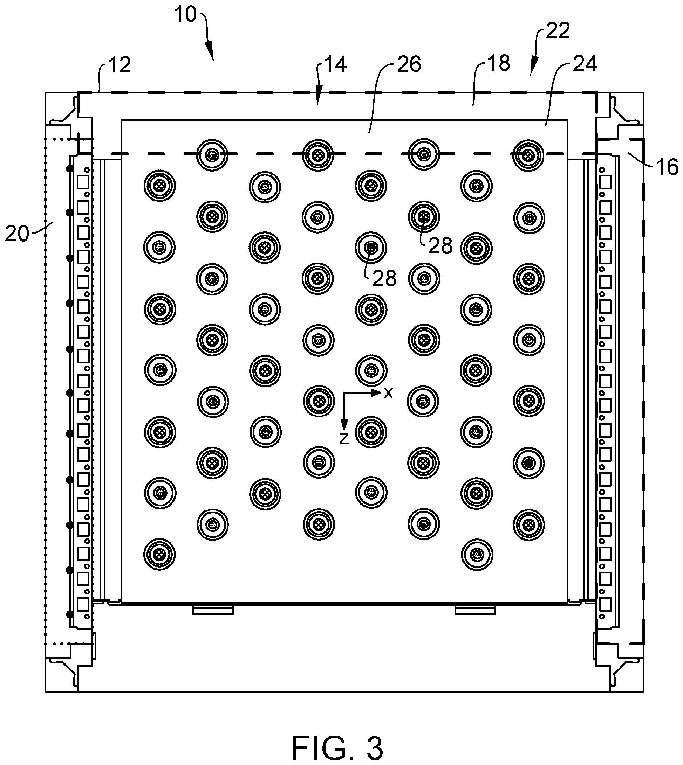

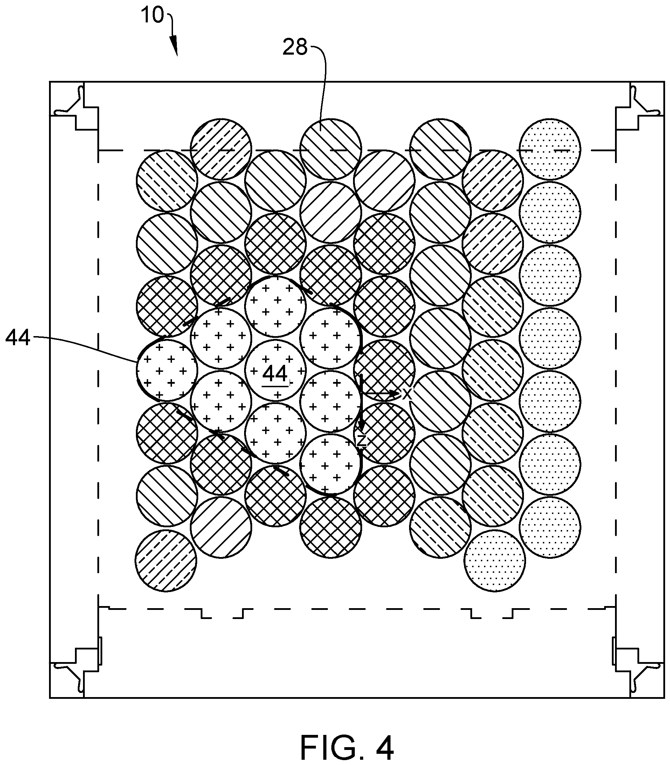

Referring to Fig. 3 and 4 a comparative example is shown that includes no ventilation holes 32 in the bottom and or top plate members 22, 24. This results in a hot zone 44, which may cause disproportionate ageing effects on the energy storage cells 28 located there.

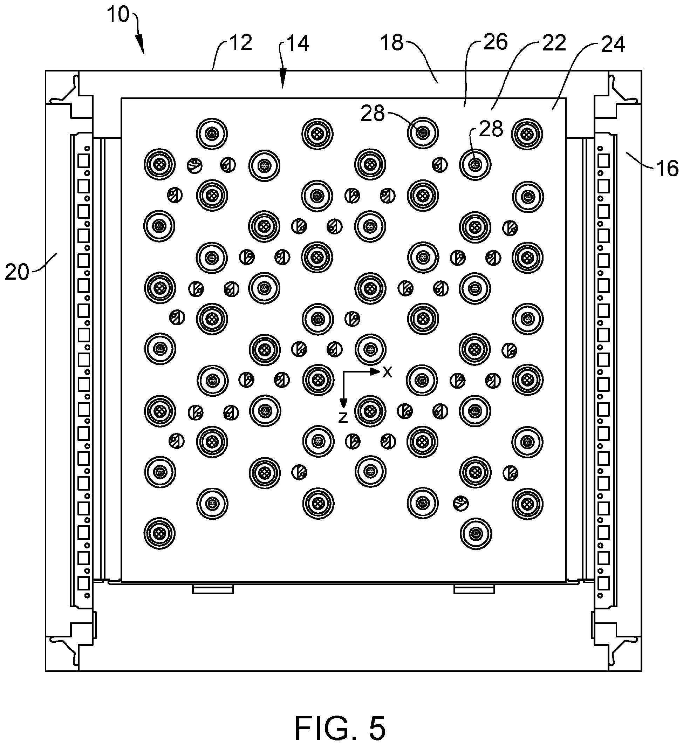

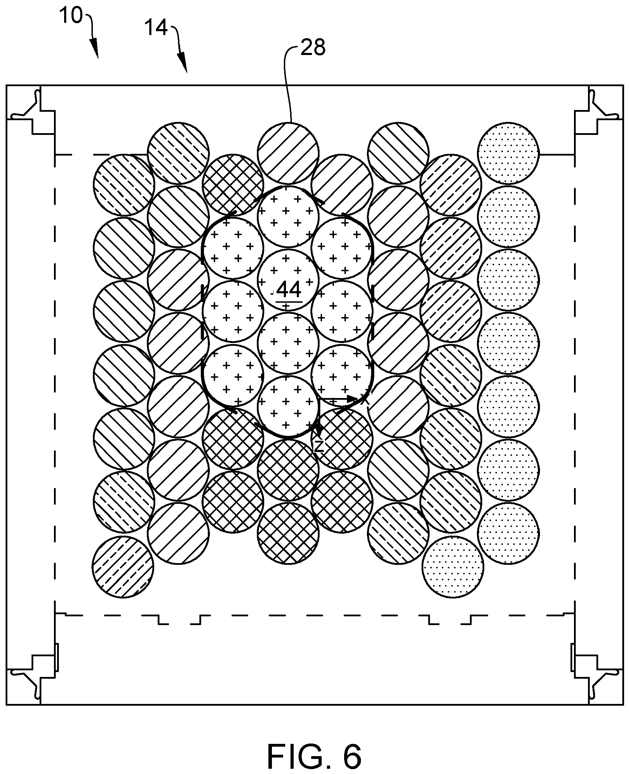

Referring to Fig. 5 and 6 a comparative example is shown that includes too much ventilation holes 32, namely at every available location. This results in too much reduction of the airflow such that again a hot zone 44 is generated that may cause disproportionate ageing effects.

### List of reference signs:

- 10: energy storage module
- 12: housing structure
- 14: energy storage unit
- 16: first intake plenum
- 18: second intake plenum
- 20: exhaust plenum
- 22: bottom plate member
- 24: top plate member
- 26: laminated structure
- 28: energy storage cell
- 30: equilateral triangle
- 32: vertical flow path
- 33: ventilation hole
- 34: rhombus
- 36: triangle
- 38: horizonal flow path
- 40: line
- 42: terminal
- 44: hot zone

## Claims

1. A support structure for an energy storage module the support structure being configured for supporting a plurality of energy storage cells, the support structure comprising:
- a bottom plate member that is arranged and configured to the plurality of energy storage cells; and
- a top plate member arranged and configured to cover the one or more stacks of energy storage cells,
wherein the bottom plate and the top plate are spaced apart along a vertical direction that is orthogonal to both the bottom plate and the top plate,
wherein the bottom plate member includes a plurality of bottom ventilation holes and/or the top plate member includes a plurality of top ventilation holes,
wherein the respective ventilation holes are arranged such that, when viewed along the vertical direction through an arbitrarily chosen ventilation hole, only a holefree portion of the respective plate member is visible through that chosen ventilation hole.

2. The support structure according to claim 1, wherein at least one bottom ventilation hole and at least one top ventilation hole are arranged relative to each other such that, when viewed along the vertical direction through an arbitrarily chosen ventilation hole of one of the bottom plate and the top plate, no ventilation hole of the other of the bottom plate and the top plate is in alignment with the arbitrarily chosen ventilation hole along the vertical direction.

3. The support structure according to any of the claims 1 or 2, wherein the bottom plate member and/or the top plate member include a plurality of cell mounting portions that are configured for mounting a plurality of energy storage cells, and, when viewed along the vertical direction, each ventilation hole is arranged in a horizontal plane defined by the bottom plate member and/or the top plate member and in a gap portion that is defined between neighboring mounting portions.

4. The support structure according to any of the preceding claims, wherein a fluid path length of a laminar fluid flow entering through an arbitrary chosen bottom ventilation hole and exiting through an arbitrarily chosen top ventilation hole is greater than a plate distance between the bottom plate and the top plate that is measured parallel to the vertical direction, or such that such that a fluid path length of a laminar fluid flow entering through an arbitrary chosen top ventilation hole and exiting through an arbitrarily chosen bottom ventilation hole is greater than a plate distance between the bottom plate and the top plate that is measured parallel to the vertical direction.

5. An energy storage unit for an energy storage module, the energy storage unit comprising a support structure according to claim 3 or 4 and plurality of energy storage cells each energy storage cell being fixed to one of the mounting portions.

6. The energy storage unit according to claim 5, wherein a group of three or four neighboring energy storage cells define therebetween at least one vertical flow path that extends between the bottom plate member and the top plate member.

7. The energy storage unit according to claim 6, wherein the vertical flow path has provided on one of its end portions one ventilation hole and on its opposite end portion a holefree portion of the respective plate member.

8. The energy storage unit according to claim 6 or 7, wherein a group of three neighboring energy storage cells is arranged such that, when viewed along the vertical direction, the energy storage cells are located so as to form vertices of an equilateral triangle, and center axes of the vertical flow path and one ventilation hole are located at the center of the equilateral triangle.

9. The energy storage unit according to any of the claims 6 to 8, wherein a group of four energy storage cells is arranged such that, when viewed along the vertical direction, the energy storage cells are located so as to form vertices of a rhombus, and center axes of the vertical flow path and one ventilation hole are located at the center of a triangle formed by a group of three neighboring energy storage cells of the four neighboring energy storage cells.

10. The energy storage unit according to any of the claims 5 to 9, wherein a group of at least four energy storage cells define therebetween a horizontal flow path that extends parallel to and between the bottom plate member and the top plate member.

11. The energy storage unit according to claim 10, wherein the horizontal flow path includes the ventilation holes on either a top portion or a bottom portion.

12. The energy storage unit according to claim 10 or 11, wherein a second group of at least four energy storage cells define therebetween a second horizontal flow path that extends parallel to and between the bottom plate member and the top plate member as well as parallel to the horizontal flow path.

13. The energy storage unit according to claim 12, wherein the second horizontal flow path includes the ventilation holes on the opposite side of the top portion or bottom portion compared to the horizontal flow path.

14. An energy storage module comprising an energy storage unit according to any of the claims 5 to 13 and a housing structure in which the energy storage unit is accommodated, wherein the housing structure comprises at least one intake plenum for cooling fluid and an exhaust plenum for the cooling fluid, and the intake plenum and the exhaust plenum are arranged to direct the flow of cooling fluid between the bottom plate member and the top plate member.

15. The energy storage module according to claim 14, wherein at least one of the intake plenum and/or the exhaust plenum includes a fan.
